# EUROPÄISCHE PATENTSCHRIFT

(11) **EP 0 769 399 B1**
(45) Veröffentlichungstag und Bekanntmachung des Hinweises auf die Patenterteilung: **02.11.2000**
(21) Anmeldenummer: 96115780.7
(22) Anmeldetag: 02.10.1996
(51) Int. Cl.: B60H 1/22

(54) **Fahrzeugheizgerät**
Vehicle heating device
Appareil de chauffage de véhicules

(30) Priorität: 19.10.1995 DE 19538947
(43) Veröffentlichungstag der Anmeldung: 23.04.1997
(73) Patentinhaber: WEBASTO THERMOSYSTEME GmbH, D-82131 Stockdorf (DE)
(72) Erfinder: Mosig, Ernst, 82377 Penzberg (DE); Kahnau, Günter, 82319 Starnberg (DE); Rahbar, Shahrzad, Willowdale, Ont. M2J 4S6 (CA); Schmitter, Helmut, Burlington, Ontario L7M 3Y5 (CA); Kulaga, Chris, Mississauga, Ontario L5C 1S1 (CA); Williamson, Frank David, Scarbouough, Ontario M1R 4X1 (CA)
(74) Vertreter: Wiese, Gerhard

(56) Entgegenhaltungen:
- EP-A- 0 505 714
- DE-A- 2 336 683
- DE-A- 3 604 314
- DE-A- 3 911 268
- US-A- 5 630 408

## Beschreibung

Die Erfindung betrifft ein Fahrzeugheizgerät mit einem Brenner, dem Brennluft über Brennlufteintrittsöffnungen mittels eines Gebläses und dem ferner Brenngas über eine Brenngaszufuhrleitung zugeführt wird gemäß dem Oberbegriff des Patentanspruchs 1.

Aus der DE 39 11 268 A1 ist eine Regeleinrichtung für einen Gasbrenner bekannt, bei dem der Differenzdruck eines Brennluft fördernden Gebläses zur Betätigung eines Servoventils verwendet wird, welches seinerseits zur Ansteuerung eines relativ kompliziert aufgebauten Gasregelventils dient.

Ein gasbeheizter Wassererhitzer, der im übrigen die Merkmale des Oberbegriffs des Patentanspruchs 1 erfüllt, ist aus der DE-A1 23 36 683 bekannt. Typischerweise wird das Brenngas mit einem Druck dem Brenner zugeführt, der über dem Atmosphärendruck liegt, sodaß zur Steuerung der Gaszufuhr ein von einem elektronischen Steuergerät angesteuertes Magnetventil unerläßlich ist.

Der Erfindung liegt die Aufgabe zugrunde, ein Fahrzeugheizgerät mit einem Brenner zu schaffen, bei dem die Herstellung des Brenngas/Brennluft-Gemisches wesentlich vereinfacht und verbessert wird.

Diese Aufgabe wird erfindungsgemäß durch die im kennzeichnenden Teil des Patentanspruchs 1 angegebenen Mittel gelöst. Vorteilhafte Ausgestaltungen der Erfindung sind den Unteransprüchen zu entnehmen.

Dadurch, daß der Eintritt von Brenngas mittels eines vom Unterdruck des Gebläses gesteuerten Ventils oder Schalters gesteuert wird, ist ein von einem Steuergerät angesteuertes Magnetventil überflüssig. Die Zufuhr des Brenngases wird unmittelbar von dem vom Brennluftgebläse saugseitig erzeugten Unterdruck gesteuert. Diese unmittelbare Ansteuerung durch das Gebläse ermöglicht auch in einem gewissen Bereich eine Leistungsregelung des Brenners, da bei einer entsprechenden Ausgestaltung des Ventils oder Schalters bei einer erhöhten Drehzahl, d.h. bei einem erhöhten saugseitigen Unterdruck des Gebläses auch eine größere Gasmenge bereitgestellt werden kann. Zum anderen bietet das Fahrzeugheizgerät einen automatischen hohen Sicherheitsstandard, da bei einem Ausfall oder einem Blockieren des Brennluftgebläses der Druckabfall für ein sofortiges Verschließen der Brenngaseintrittsöffnung sorgt.

Gemäß einer besonders einfachen Ausgestaltungsform ist vorgesehen, daß das Ventil oder der Schalter mittels einer Membran betätigt wird, die bei Stillstand des Gebläses oder sehr langsamer Drehzahl ein Verschließen der Brenngaszufuhrleitung bewirkt. Ein derartiger mit einer Membran ausgestalteter Schalter ist besonders kostengünstig herstellbar. Diese Ausführungsform wird dann einfach, wenn das Brenngas an der Brenngaseintrittsöffnung einen Unterdruck gegenüber dem Atmosphärendruck von etwa 10-20 Pa aufweist und wenn die Membran unmittelbar an der Brenngaseintrittsöffnung anliegt.

Für eine besonders gute Durchmischung des Brenngases mit der Brennluft ist es vorteilhaft, wenn eine stromab der Brenngaszuführleitung angeordnete Brenngaseintrittsöffnung und die Brennlufteintrittsöffnungen an einer gemeinsamen Mischeinrichtung unter einem Winkel zueinander einmünden. Als besonders vorteilhaft hatte sich erwiesen, wenn die Brennlufteintrittsöffnungen als radiale Bohrungen in die Mischeinrichtung einmünden, während die Brenngaseintrittsöffnung als tangentiale Bohrung ausgebildet ist.

Die Aufbereitung des Brennluft/Brenngas-Gemisches wird zusätzlich dadurch verbessert, daß zwischen dem Gebläse und der Brennkammer ein Leitapparat zur Verwirbelung des Gemisches angeordnet ist und dadurch, daß die Mischeinrichtung durch ein Hitzeschild vor einer Wärmerückstrahlung von Seiten der Brennkammer geschützt ist.

Nachfolgend wird ein Ausführungsbeispiel der Erfindung anhand der Zeichnung beschrieben. Es zeigt:
- Fig. 1: ein Längsschnitt durch ein Fahrzeugheizgerät
- Fig. 2: einen vergrößerten Längsschnitt durch einen Brenner,
- Fig. 3: einen Schnitt durch die Mischeinrichtung und
- Fig. 4: eine schematische Darstellung eines Unterdruckventils bzw. - Schalters.

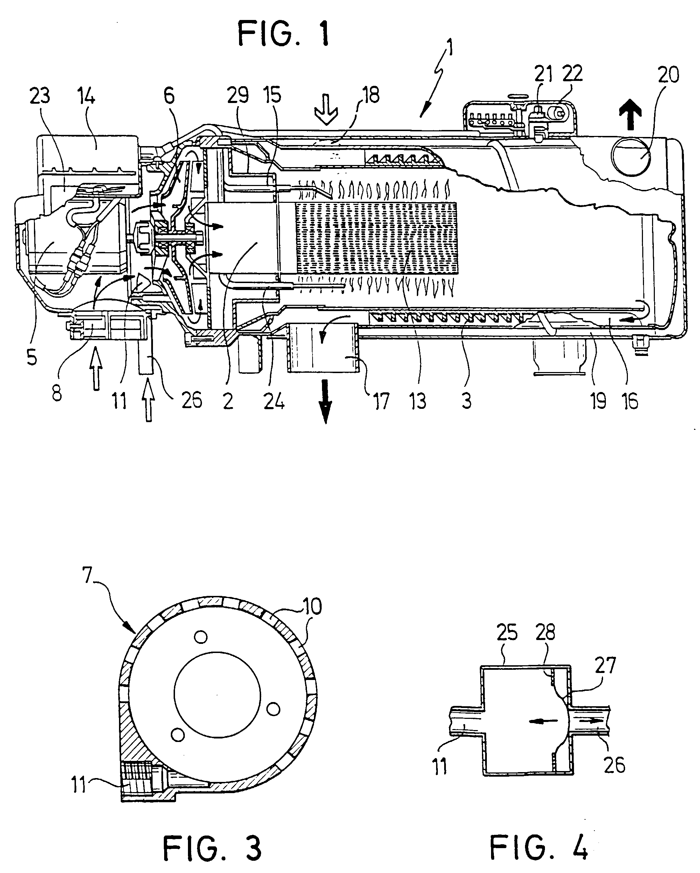

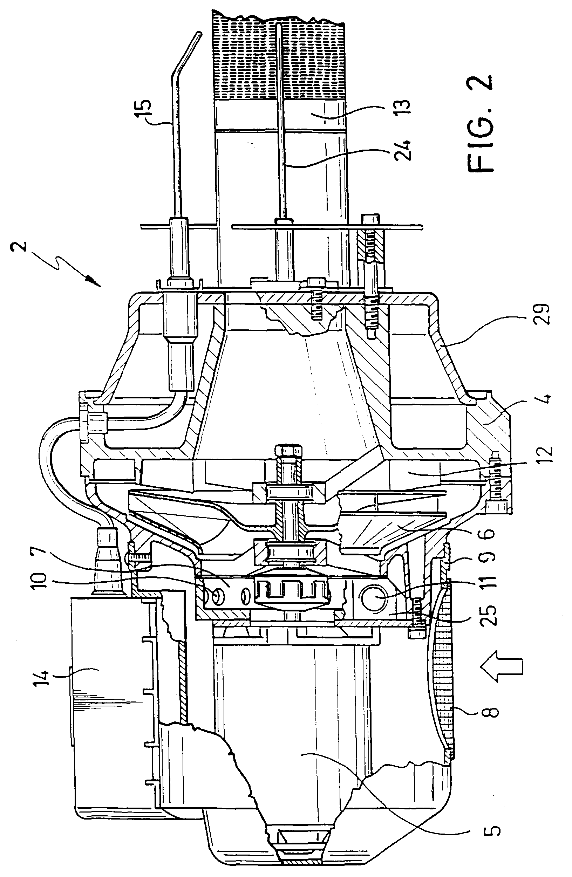

Ein Fahrzeugheizgerät 1 weist als Hauptbaugruppen einen Brenner 2 und einen Wärmetauscher 3 auf, die an einem gemeinsamen Flanschteil 4 miteinander verbunden sind. Im Brenner 2 ist ein Elektromotor 5 angeordnet, der ein Gebläse 6 für die Förderung von Brennluft antreibt. Auf der Saugseite des Gebläses 6 ist eine Mischeinrichtung 7 vorgesehen. Diese steht zum einen mit einer Brennluftzufuhr 8 in Verbindung, die in einer Außenwand eines Gehäuseteils 9 vorgesehen ist, welches den Elektromotor 5 und die Mischeinrichtung 7 umgibt. Wie im Detail in Fig. 3 zu ersehen, ist die Mischeinrichtung 7 als flaches zylindrisches Teil ausgebildet, dessen Außenwand von mehreren radial einmündenden Brennlufteintrittsöffnungen 10 durchbrochen ist, die innerhalb des Gehäuseteils 9 mit der Brennluftzufuhr 8 in Verbindung stehen. Die Mischeinrichtung 7 ist zum anderen mit einer tangential einmündenden Brenngaseintrittsöffnung 11 versehen. Brennlufteintrittsöffnungen 10 und Brenngaseintrittsöffnung 11 bilden somit einen rechten Winkel zueinander, wodurch eine besonders gute Durchmischung gewährleistet wird.

Die Brenngaseintrittsöffnung 11 steht stromauf über ein Unterdruckventil 25, das auch als Unterdruckschalter ausgebildet sein kann, mit einer Brenngaszufuhrleitung 26 in Verbindung.

Auf der Druckseite des Gebläses 6 schließt sich an dieses ein Leitapparat 12 an, der für eine zusätzliche Verwirbelung des Brenngas/Brennluft-Gemisches sorgt. An diesen schließt sich eine sich düsenartig verengende zentrale Öffnung im Flanschteil 4 an, die in eine Brennkammer 13 übergeht.

Zur Zündung des Brenngas/Brennluft-Gemisches ist eine Zündelektrode 15 parallel zur Außenwand der mit Bohrungen versehenen Brennkammer 13 vorgesehen, die über einen außen am Gehäuseteil 9 angeordneten Zündfunkengeber 14 mit entsprechender elektrischer Energie versorgt wird.

Die Brenngase verlassen die Brennkammer 13 an der dem Flanschteil 4 gegenüberliegenden Stirnseite, wo sie umgelenkt und über einen Rauchgaskanal 16 und einen Abgasstutzen 17 aus dem Fahrzeugheizgerät 1 ausgeleitet werden. Über den Wärmetauscher 3 wird ihnen dabei der wesentliche Teil der Wärmeenergie entzogen. Zu diesem Zweck wird dem Wärmetauscher 3 über einen Wassereintritt 18 Wasser zugeführt, das einen den Rauchgaskanal 16 spiralförmig umgebenden Wassermantel 19 im Gegenstrom durchströmt und bei einem Wasseraustritt 20 das Fahrzeugheizgerät 1 verläßt.

An der Außenseite dem Wassermantels 19 sind am Gehäuse eine Überhitzungssicherung 21 sowie ein Thermostat 22 vorgesehen, welche mit einem Steuergerät 23 in Verbindung stehen. Mit dem Steuergerät 23 steht ferner ein Flammwächter 24 in Verbindung, der vom Flanschteil 4 zentral in die Brennkammer 13 hineinragt.

Das schematisch dargestellte Unterdruckventil 25 weist eine Kammer auf, in die auf der einen Seite die Brenngaszufuhrleitung 26 einmündet und die anderen Endes mit der Brenngaseintrittsöffnung 11 in Strömungsverbindung steht. Im Inneren der Kammer wird von Haltern 28 eine Membran 27 gehalten, die sich je nach den in der Kammer herrschenden Druckverhältnissen entsprechend den in Fig. 4 dargestellten Pfeilen entweder nach rechts an die Einmündung der Brenngaszufuhrleitung 26 anlegt und diese versperrt oder sich bei entsprechend starkem, vom Gebläse 6 erzeugtem Saugdruck nach links von dieser Öffnung wegbewegt und dadurch die Zufuhr von Brenngas zur Brenngaseintrittsöffnung 11 ermöglicht.

Das Brenngas wird in der Brenngaszufuhrleitung 26 durch mehrfache Druckminderung mit einem Druck bereitgestellt, der vorzugsweise Δp=10-20 pa unterhalb des Atmosphärendrucks liegt. Dadurch legt sich die Membran 27 bei Stillstand des Gebläses 6 oder sehr geringer Drehzahl desselben selbsttätig vor die Einmündung der Brenngaszufuhrleitung 26 und versperrt diese.

Es ist jedoch ebensogut eine Variante denkbar, bei der das Brenngas in der Brenngaszufuhrleitung 26 mit einem geringen Überdruck bereit gestellt wird, wobei dann die Membran 27 eine geringe federnde Vorspannung aufweist, welches sie bei fehlendem Saugdruck durch das Gebläse 6 für ein Versprerren der Brenngaszufuhrleitung 26 an deren Einmündung anlegen läßt. Die federnde Vorspannung der Membran 27 ist dann so ausgelegt, daß sie vom sich aufbauenden Saugdruck 6 bei steigender Gebläsedrehzahl überwunden wird und zu einem zunehmenden Abheben der Membran 27 führt.

Die vom Saugdruck des Gebläses 6 gesteuerte Zufuhr des Brenngases ermöglicht zum einen einen einfachen Aufbau eines Fahrzeugheizgerätes. Die saugseitige Zufuhr des Brenngases, vorzugsweise unter einem Unterdruck, dessen anschließende Vermischung in der Mischeinrichtung 7, sowie das anschließende Zerhacken durch das Gebläse 6 und das zusätzliche Verwirbeln des Gemisches im Leitapparat 12 sorgen für eine hervorragende Aufbereitung des Brenngas/Brennluft-Gemisches, die zu ausgezeichneten Brennwerten führt.

Ein zwischen der Brennkammer 13 und der Mischeinrichtung 7 angeordneter Hitzeschild 29 schützt letztere vor einer schädlichen Wärmerückstrahlung von Seiten der Brennkammer und ermöglicht dadurch trotz der kompakten, integrierten Anordnung der Mischeinrichtung 7 im Fahrzeugheizgerät 1 eine zuverlässige Gemischaufbereitung frei von größeren Temperaturschwankungen.

### Bezugszeichenliste

- 1: Fahrzeugheizgerät
- 2: Brenner
- 3: Wärmetauscher
- 4: Flanschteil
- 5: Elektromotor
- 6: Gebläse
- 7: Mischeinrichtung
- 8: Brennluftzufuhr
- 9: Gehäuseteil
- 10: Brennlufteintrittsöffnungen
- 11: Brenngaseintrittsöffnung
- 12: Leitapparat
- 13: Brennkammer
- 14: Zündfunkengeber
- 15: Zündelektrode
- 16: Rauchgaskanal
- 17: Abgasstutzen
- 18: Wassereintritt
- 19: Wassermantel
- 20: Wasseraustritt
- 21: Überhitzungssicherung
- 22: Thermostat
- 23: Steuergerät
- 24: Flammwächter
- 25: Unterdruckventil
- 26: Brenngaszufuhrleitung
- 27: Membran
- 28: Halter
- 29: Hitzeschild

## Patentansprüche

1. Fahrzeugheizgerät (1) mit einem Brenner (2), dem Brennluft über Brennlufteintrittsöffnungen (10) mittels eines Gebläses (6) und dem ferner Brenngas über eine Brenngaszufuhrleitung (26) zugeführt wird, wobei Brennluft und Brenngas auf der Saugseite des Gebläses (6) eintreten, wobei der Eintritt von Brenngas mittels eines vom Differenzdruck des Gebläses (6) gesteuerten Ventils oder Schalters (25) gesteuert wird, **dadurch gekennzeichnet**, daß das Brenngas in der Brenngaszuführleitung (26) einen Unterdruck gegenüber dem Atmosphärendruck aufweist und das Ventil oder der Schalter (25) unmittelbar an der Brenngaszufuhrleitung (26) anliegt.

2. Fahrzeugheizgerät nach Anspruch 1, **dadurch gekennzeichnet**, daß das Ventil oder der Schalter (25) mittels einer Membran (27) betätigt wird, die bei Stillstand des Gebläses (6) oder langsamer Drehzahl ein Verschließen der Brenngaszufuhrleitung (26) bewirkt.

3. Fahrzeugheizgerät nach Anspruch 2, **dadurch gekennzeichnet**, daß der Unterdruck in der Brenngaszuführleitung (26) ein Δp von etwa 10 bis 20 Pa beträgt.

4. Fahrzeugheizgerät nach einem der vorhergehenden Ansprüche, **dadurch gekennzeichnet**, daß eine stromab der Brenngaszufuhrleitung (26) angeordnete Brenngaseintrittsöffnung (11) und die Brennlufteintrittsöffnungen (10) an einer gemeinsamen Mischeinrichtung (7) unter einem Winkel zueinander einmünden.

5. Fahrzeugheizgerät nach Anspruch 4, **dadurch gekennzeichnet**, daß die Brennlufteintrittsöffnungen (10) als radiale Bohrungen in die Mischeinrichtung (7) einmünden, während die Brenngaseintrittsöffnung (11) als tangentiale Bohrung ausgebildet ist.

6. Fahrzeugheizgerät nach Anspruch 4 oder 5, **dadurch gekennzeichnet**, daß zwischen dem Gebläse (6) und der Brennkammer (13) ein Leitapparat (12) zur Verwirbelung des Brenngas/Brennluftgemisches angeordnet ist.

7. Fahrzeugheizgerät nach einem der Ansprüche 4 bis 6, **dadurch gekennzeichnet**, daß zwischen der Mischeinrichtung (7) und einer Brennkammer (13) ein Hitzeschild (29) angeordnet ist.

## Claims

1. A motor vehicle heater (1) with a burner (2) to which combustion air is fed by means of a blower (6) via combustion air inlet apertures (10) and to which furthermore combustible gas is fed via a combustible gas feed line (26), combustion air and combustible gas entering on the intake side of the blower (6), the intake of combustible gas being controlled by means of a valve or switch (25) controlled by the differential pressure of the blower (6), characterised in that the combustible gas in the combustible gas feed line (26) is at a negative pressure compared with atmospheric pressure and in that the valve or the switch (25) bears directly on the combustible gas feed line (26).

2. A motor vehicle heater according to Claim 1, characterised in that the valve or the switch (25) is actuated by means of a membrane (27) which, if the blower (6) stops or rotates at a slow speed, has the effect of closing the combustible gas feed line (26).

3. A motor vehicle heater according to Claim 2, characterised in that the negative pressure in the combustible gas feed line (26) amounts to a Δp of about 10-20 Pa.

4. A motor vehicle heater according to one of the preceding Claims, characterised in that a combustible gas inlet aperture (11) disposed downstream of the combustible gas feed line (26) and the combustion air inlet apertures (10) merge with one another at an angle at a common mixing means (7).

5. A motor vehicle heater according to Claim 4, characterised in that the combustion air inlet apertures (10) discharge as radial bores into the mixing means (7) while the combustible gas inlet aperture (11) is constructed as a tangential bore.

6. A motor vehicle heater according to Claim 4 or 5, characterised in that between the blower (6) and the combustion chamber (13) there is a diffuser (12) for swirling the combustible gas/combustion air mixture.

7. A motor vehicle heater according to one of Claims 4 to 6, characterised in that a heat shield (29) is disposed between the mixing means (7) and a combustion chamber (13).

## Revendications

1. Appareil de chauffage de véhicules (1) comprenant un brûleur (2) auquel est amené l'air de combustion par des ouvertures d'entrée (10) au moyen d'une soufflante (6) et, en plus, le gaz combustible est amené par une conduite (26), tandis que l'air de combustion et le gaz combustible pénètrent sur le côté aspiration de la soufflante (6) et l'entrée du gaz de combustion est commandée par une soupape ou un connecteur (25), piloté par la pression différentielle de la soufflante (6)
caractérisé en ce que
le gaz combustible, dans sa conduite d'amenée (26) est en dépression par rapport à la pression atmosphérique, la soupape ou le connecteur (25) étant monté directement sur la conduite (26) d'amenée du gaz combustible.

2. Appareil de chauffage selon la revendication 1,
caractérisé en ce que
la soupape ou le connecteur (25) est actionné par une membrane (27) qui produit la fermeture de la conduite (26) d'amenée du gaz combustible quand la soufflante (6) ne tourne pas ou tourne lentement.

3. Appareil de chauffage selon la revendication 2,
caractérisé en ce que
la dépression dans la conduite d'amenée de gaz combustible (26) atteint un Δp compris entre 10 et 20 Pa environ.

4. Appareil de chauffage selon une des revendications précédentes,
caractérisé en ce que
dans un dispositif mélangeur commun (7) débouchent, en faisant un angle entre elles, une entrée de gaz combustible (11) située en aval de la conduite d'amenée (26) du gaz combustible et les ouvertures (10) d'entrée d'air de combustion.

5. Appareil de chauffage selon la revendication 4,
caractérisé en ce que
les ouvertures (10) d'entrée d'air de combustion sont des perçages radiaux pratiqués dans le dispositif mélangeur (7), tandis que l'ouverture (11) d'entrée du gaz combustible est un perçage tangentiel.

6. Appareil de chauffage selon la revendication 4 ou 5,
caractérisé en ce qu'
entre la soufflante (6) et la chambre de combustion (13) est monté un appareil directeur (12) ayant pour rôle de faire tourbillonner le mélange gaz combustible/air de combustion.

7. Appareil de chauffage selon une des revendications 4 à 6,
caractérisé en ce qu'
un écran pare-chaleur (29) est monté entre le dispositif mélangeur (7) et la chambre de combustion (13).
